(19) **Europäisches Patentamt / European Patent Office / Office européen des brevets**

(11) **EP 3 989 482 B1**

(12) **EUROPEAN PATENT SPECIFICATION**

(45) Date of publication and mention
of the grant of the patent:
**29.10.2025 Bulletin 2025/44**

(51) International Patent Classification (IPC):
*H04L 9/40* (2022.01)     *H04W 12/106* (2021.01)
*H04L 9/32* (2006.01)     *H04W 12/02* (2009.01)

(21) Application number: **21204346.7**

(22) Date of filing: **22.10.2021**

(52) Cooperative Patent Classification (CPC):
**H04L 63/0421; H04L 9/3218; H04L 9/3247;
H04W 12/02; H04W 12/106; H04L 63/0807**

(54) **CREATING AND MANAGING DISPOSABLE IDENTITIES**

EINWEG-IDENTITÄTEN ERSTELLEN UND VERWALTEN

CRÉATION ET GESTION DES IDENTITÉS JETABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2020 EP 20461573**

(43) Date of publication of application:
**27.04.2022 Bulletin 2022/17**

(73) Proprietor: **No.ID ehf.
110 Reykjavík (IS)**

(72) Inventors:
• **Kazana, Tomasz
02-384 Warszawa (PL)**
• **Fabianski, Grzegorz
02-127 Warszawa (PL)**
• **Dudek, Maciej
01-207 Warszawa (PL)**

(74) Representative: **AOMB Polska Sp. z.o.o.
ul. Rondo Ignacego Daszynskiego 1
00-843 Warsaw (PL)**

(56) References cited:
**GB-A- 2 549 786**     **US-A1- 2016 065 541**

• **MARIOS ISAAKIDIS ET AL: "UnlimitID",
WORKSHOP ON PRIVACY IN THE ELECTRONIC
SOCIETY, ACM, 2 PENN PLAZA, SUITE 701 NEW
YORK NY 10121-0701 USA, 24 October 2016
(2016-10-24), pages 139 - 142, XP058300286,
ISBN: 978-1-4503-4569-9, DOI: 10.1145/
2994620.2994637**
• **MARIOS ISAAKIDIS ET AL: "UnlimitID",
WORKSHOP ON PRIVACY IN THE ELECTRONIC
SOCIETY, ACM, 2 PENN PLAZA, SUITE 701 NEW
YORK NY 10121-0701 USA, 24 October 2016
(2016-10-24), pages 139 - 142, XP058282069,
ISBN: 978-1-4503-4569-9, DOI: 10.1145/
2994620.2994637**
• **FOTEINI BALDIMTSI ET AL: "Anonymous
credentials light", COMPUTER &
COMMUNICATIONS SECURITY, ACM, 2 PENN
PLAZA, SUITE 701 NEW YORK NY 10121-0701
USA, 4 November 2013 (2013-11-04), pages 1087 -
1098, XP058034063, ISBN: 978-1-4503-2477-9,
DOI: 10.1145/2508859.2516687**

EP 3 989 482 B1

## Description

### Field of the invention

The object of the invention is a method for creating and managing disposable identities to improve the anonymity and security during the use of third-party servers.

### Prior art

The need for privacy protection on the Internet is obvious nowadays. In the era of the omniscient tracking and profiling, there is a large group of people who are unwilling to give their data anywhere and who are understandably suspicious of any online attempts of third parties to learn even minimum information about them. We do not control who knows what about us. Companies may freely sell the information they collect about us to third parties, who process them to have a better overview or to make money. Data brokers extract, repackage and sell our data. Information moves from place to place in unknown directions and without any control on our part. This problem affects standard Internet users because they often use similar or even the same authentication data for a number of a services. If a data leak happens in one place, someone may take control of the whole online life of the victim. To make matters worse, the design of many systems allows cybercriminals and suspicious companies to gather information.

So it is obvious why Internet users want to keep their sensitive and private data confidential. High anonymity protects them against data leaks and guarantees privacy. In contrast, lack of anonymity leads to many threats.

The only 100% effective way to protect your privacy is to give your data to no one. Unfortunately, this means not using modern tools and blocking yourself from the Internet. Clearly, caring about anonymity is not reserved just for paranoiacs or criminals but it stems from the need for a sense of security and peace and a feeling of not being controlled, watched or profiled.

In view of the foregoing, many tools have been created to allow people to render their online activity anonymous. Solutions such as the Tor search engine or anonymous e-mail addresses can help you achieve a substantial sense of anonymity. However, every sensitive area requires a separate technology based on specific needs. There are such tools as password managers, virtual payment cards (e.g. *privacy.com, Apple Pay, Revolut*), providers of masked phone numbers, temporary e-mails or websites, such as *haveibeenpwned.com*, which help monitor data breaches, as well as platforms generating fake data sets, i.e. e-mail accounts, phone numbers, passwords etc. (e.g. *Blur, MySudo*).

US patent US10511493B1 registered by Anonyome Labs discloses a system and method for managing digital identities. The memory of the device stores real identity attributes for a real individual and at least two sets of digital identity attributes, each operative as a personal privacy proxy with interval attributes of identity. The at least two sets of the digital identity attributes include the first e-mail address generated for the digital identity by a computer and associated with the first role and the second e-mail address generated for the digital identity by a computer and associated with the second role. Information about any newly created e-mail account and other changes is synchronised for example with the Digital Identity App. The app manages one or more digital identities of the user, and each digital identity manages one or several digital identity roles. The app makes it possible for the user to choose the digital identity and the role for the selected digital identity while accessing a given website.

The US10931650B1 patent of the same Applicant discloses an apparatus and method for building, expanding and managing the interactions between digital identities and digital identity apps. The memory of the devices saves the attributes of the actual identity and the digital identity. A digital identity management system is hosted to communicate with digital identity applications that observe a common application program interface. In combination with the user's device, the device permits digital identity management, i.e. creating, deleting, updating, copying and managing the digital identity data attributes, as well as encrypting and decrypting the databases of digital identity data attributes, performing a telephone operation and an e-mail operation in accordance with the digital identity data attributes.

Another US patent, US10320753B1, also from the same Applicant, presents a method and system for providing persona masking in a computer network and relies on allowing the user to designate a selected persona from a pool of potential personae, where each potential persona is associated with the user and has a distinct set of computer network attributes. A virtual private network egress point for the selected persona is designated, where the virtual private network egress point masks computer network attributes of the selected persona. The platform allows the user to have multiple persona instances on different devices and each persona instance uses a different VPN account and VPN egress point, thereby VPN accounts are unrelated, making the user's persona correlation more difficult to discover.

The international application number WO2021112973A1 filed by Microsoft Technology Licensing LLC concerns the management of plural personae of one user for the purpose of interaction with a specific service provider. The computer system verifies the identity of the user who is to interact with the service provider and gains access to multiple different personae linked to the identity of the user, with each individual persona including information about the user linked to the user's identity; it selects a specific persona to be used in the interaction with the service provider; and its provides the selected persona to allow the user to interact with the service provider using the selected persona. The user may implement various personae which are linked to their identity and thus can control what information about the user is shared with the service provider.

The Chinese application number CN113268722A concerns a system and method for personal identity management encompassing the user and a server; the user uses the key word specified by the user to assess the key and the server accepts the information about the digital identity sent from the user. The method presented in this invention makes it possible to generate the available digital identities safely, quickly and without limitations, which allows the user to switch to multiple digital identities and thus achieve the effect of faking the tracking of digital identities and better protect their privacy.

The application GB2549786A discloses a system and method for storing and controlling access to anonymised personalised behavioural data, such as activity data, at a data engine. A registration token generator generates anonymous registration tokens and makes them available to individuals. Each registration token represents an authorisation for registration of one or more individuals as system users by the data engine. A service provider proxy anonymously receives one of the generated registration tokens from an individual, and authenticates the received registration token with the registration token generator, and, upon the authentication being successful, anonymously registers the individual with the data engine as a system user, by obtaining an anonymous user ID for the system user, and providing the anonymous user ID to the system user and to the data engine. An access controller receives data requests for specified anonymised personalised behavioural data stored by the data store, and replies with anonymised personalised behavioural data specified in the received data request which specifies the anonymous user ID.

Another American patent application US2016065541A1 discloses a method of anonymous single signon to third-party systems. An online system receives from a third-party application on a client device, an anonymous login request to anonymously log a user of the online system into a third-party system associated with the third-party application. Responsive to receiving the anonymous login request, the online system generates a permissions user interface (UI) that provides an interface component including an option for the user to anonymously log into the third-party system using the user's login information for the online system. The online system provides the permissions UI to the client device, and receives permissions information from the client device. The online system generates an anonymous identifier that allows the user to login to the third-party system. The online system provides the anonymous identifier to the third-party application to allow anonymous login of the user into the third-party system in accordance with the permissions information.

An article UnlimitID: Privacy-Preserving Federated Identity Management using Algebraic MACs (M.Isaakidis, H.Halpin, G.Danezis, WPES '16: Proceedings of the 2016 ACM on Workshop on Privacy in the Electronic Society, 10.2016, 139-142) discloses a method for enhancing the privacy (of commodity OAuth and applications such as OpenID Connect), using anonymous attribute-based credentials based on algebraic Message Authentication Codes (aMACs). The aim of the solution is the creation of multiple persistent and unlinkable pseudo-identities whereby requiring no change in the deployed code of relying parties, only in identity providers and the client.

NuID is an example of an online platform for rendering user data anonymous (https://nuid.io/) - a trustless authentication and decentralised identity interface relying on cryptographic methods. Instead of providing a secret key to the authentication server, the user's device generates a zero-knowledge cryptographic proof. The proof is used to verify if the user has entered a correct authentication key, without any private authentication data leaving the device. The NuID service consists of four main components: (1) the ZKP authentication protocol, (2) a distributed ledger storage layer, (3) opensource client libraries, and (4) the NuID API and service infrastructure. Collectively these four components enable the trustless authentication and decentralised identity model.

Unfortunately, the known solutions for protecting the privacy of users by masking their identity have major weaknesses. First of all, none of the known solutions limit the number of accounts which the user may create on a given platform, which means that none of the known solutions protect platform owners from attacks by dishonest users. Secondly, the comfort of operation comes at the expense of centralisation. Such services can be described as having a Single Point of Failure - anyone who has access to internal data can recreate the relations between users, virtual identities and even reveal the real names. And "anyone" can have many faces - from employees and providers to corrupted officials and cybercriminals. Furthermore, such solutions are not business-friendly, and many online platforms actually try actively to get rid of the users of such solutions. Platform owners tend to be suspicious of accidental e-mails or phone calls. This attitude is understandable too - full and uncontrolled anonymity may result for instance in the creation of a huge number of accounts by cybercriminals in order to destabilise or obstruct the operation of the platform or even to destroy it. Consequently, it is very hard to take care of one's anonymity and privacy because service providers block or actively obstruct any privacy protection attempts. Furthermore, none of the known solutions makes it possible to detect which platform is responsible for disclosure of data. Additionally, it is important that users do not wonder if the service provider actually operates in accordance with the GDPR etc. - after all, this is just a declaration unsupported with any evidence. Users should feel protected even if they do not trust the services they use and they should make their own decisions on who should know what about them.

The awareness of the above problems makes it necessary to find an acceptable compromise which would respect the interests of both sides - users caring about their anonymity and platforms afraid of being flooded with fake duplicated accounts of pseudo users.

**Beneficial effects of the invention**

The present invention provides a high level of online privacy protection, both for individuals and for businesses. By permitting the creation of multiple disposable identities, it allows users to register accounts on websites and online platforms without giving their true data and it makes it permits managing those identities. Users are fully anonymous to the platform they use but they cannot create more accounts than the number specified for the platform, which protects platform owners. Additionally, because a different persona with different data is assigned to every platform, the invention makes it possible to establish which platform is responsible for a data leak, if any. Besides, a dishonest server or owner of an identity protection platform is unable, for mathematical reasons, to breach the elements of the declared security - the intermediary platform knows all of its users and is aware of the existence of all the personae in the system but is still unable to connect those data in any way to determine which personae belong to which user or whether several personae belong to the same user. Consequently, even if the anonymity of one persona is compromised, the other personae remain safe.

This way the invention makes it possible to guard one's anonymity on the Internet, eliminates the need to trust third-party identity management platforms, neutralises the risk of privacy being compromised in the event of a leak, sale or theft of any anonymous persona owned by the user (no domino effect based on connections), helps protect businesses (owners of the platforms where the identities will be used) from attacks, mass account creation and spam, and makes it possible to establish which platforms are responsible for data leaks, if any.

**Summary of the invention**

The invention relates to a method for creating and managing disposable identities relying on an intermediary platform divided into a non-secret part "P1" and an anonymous part "P2", the parts being executed on at least one server and comprising the following steps:

a) A request to generate at least one token is sent by the user to the non-secret part "P1", to which the user contacting it must always introduce himself, moreover in order to identify the user within the system the user generates once a random value secretUserID and shares its commitment (L) with the server, the secretUserId is used as a part of the protocol to generate the Token.

b) For each token request, the user and "P1" execute the Anonymous Credentials protocol, resulting in the generation of the token by the non-secret part "P1", each token contains commitment (C) to the secretUserId, the anonymous credential's protocol guarantees that C commits the same value of secretUserId in all other token received by a given user, meaning tokens generated from each separate execution of this step.

c) For each token request, the user computes the uniqueID and sends a domain, unused token, computed uniqueID and preferably the personalID to the anonymous part "P2", wherein the personalID is any value which is randomly selected by the user and is not revealed in the non-secret part and requests the creation of a disposable identity dedicated to the given domain wherein the uniqueID is defined as:

uniqueID = f(domain, secretUserID, i), wherein
domain is a domain for which the disposable identity is to be generated
i is a counter used of the users disposable identities assigned to the domain;
f is a hash function.

d) Each token is verified by the anonymous part "P2", by proving by the user correctness of the provided uniqueID using a Zero-Knowledge Proof, the user proves the correctness of the uniqueID by proving the knowledge of a secretUserId and i value defined as:

uniqueID = f(domain, secretUserID, i)
I $\leq$ limit of disposable identities for the domain,
SecretUserID is included in commitment C, where C is included in the Token.

e) For each token if the verification is correct and the uniqueID have not been generated before, the anonymous part "P2" creates the disposable identity, comprising access data concerning attributes related to the disposable identity, and provides the access data to the user.

The method is characterised in that the user may generate a limited number of the disposable identities intended for use on one platform, whereby the maximum number of the disposable identities is pre-defined individually for each platform such that a different limit may be set for different platforms, and in that the anonymous part "P2" sees the unique ID, domain, access data and preferably personalD.

In an embodiment, step (a) is preceded by a step where the user creates an account in the non-secret part.

In another embodiment, step (b) is executed by the first server, while steps (d) and (e) are executed by the second server.

In the next embodiment, an anonymous credentials light token is generated during step (a).

In a different embodiment, the user may generate no more than three disposable identities.

In another embodiment, the token generated during step (b) is a signed value C = personaSlotID and it also contains the message $C' = (z\gamma, (C \cdot g^{rand})\gamma)$, where z and g are established public values and $\gamma$ is a value known only to the user, while

personaSlotID = partialUserIDi·Commit(0, personalD, 0, randomness) = Commit(partialsecretUserID$_i$, personalD, i, randomness), where

$$partialUserID_i = Commit(partialSecretUserID_i, 0, i, randomness),$$

where

i is the number of a subsequent disposable identity,

partialSecretUserID$_i$ is the secret value generated by user i

Commit means execution of the Pedersen commitment function,

personalD is any value which is randomly selected by the user and is not revealed in the non-secret part,

and afterwards, at step (d), the user proves that

$C' = (z^\gamma, Commit(partialSecretUserID_i, 0, i; randomness) {}^\gamma g^{rnd \cdot \gamma}$,

$i \leq$ limit of disposable identities for a particular domain,

uniqueID = RG(domain)partialUserSecretID$_i$, where

RG is the function returning the G elliptic curve element,

Domain is the domain for which the disposable identity is to be generated.

In another embodiment, a disposable identity includes data concerning at least one of address of residence, e-mail address, phone, payment card, first name, last name, nationality.

In the next embodiment, step (e) is followed by the following steps:

f) the user creates an account on an third-party platform using the data received at step (e),

g) after receiving the request, the third-party platform sends an inquiry to the anonymous part to ask whether the used data were generated by the anonymous part,

h) a response is sent from the anonymous part to the third-party platform.

Another object of the invention is a computer programme with instructions which, when activated on the server, result in the server executing the above method.

One more object of the invention is a data medium which can be read by the server and which stores the programme executing the above method.

## Detailed description

The introduction of limits on the number of personae created by the user on a given platform and the way of observing those limits is crucial and particularly important in this invention. This is a complex and challenging problem and the Authors of the invention are the first ones to have solved it. The introduction of limits and a mechanism for observing them protects third-party platforms from attacks by dishonest users and helps identify platforms responsible for data breaches - all this while guaranteeing user anonymity.

A conceptual analysis of the problem presented in the above section resulted in a concept of an anonymous persona with guarantees. The general idea of the proposed paradigm is that users may remain fully anonymous to the platform they are using but with an extra guarantee that one natural person cannot create more than e.g. three accounts on the platform. It is of course easy to design such a solution if there is consent to the existence of an additional trusted party, i.e. an intermediary platform which would check appropriate restrictions. However, the purpose of this invention is to achieve the same effect without the participation of any trusted intermediary. Or more specifically, even if a certain intermediary party is present in the proposed solution, the party will be designed in such a way that it will not have to be trusted because even if it acts maliciously or is hacked, it will be unable to read which users created which accounts and on which third-party platform. But it will still be able to observe account limits on a particular platform. These seemingly irreconcilable assumptions can be achieved with advanced mathematical mechanisms, namely with the zero-knowledge protocols known in the current state of the art. The new system has the advantages of a centralised system and provides a data management security level without the assistance of third-party platforms. This cryptographic challenge was resolved based generally on two concepts: separation of personae and business-friendly limits. The elements of the proposed system are based on a trustless paradigm which requires modern theoretical cryptology - e.g. zero-knowledge protocols, blind signatures or anonymous tokens. It is a common situation in the classic user-server model that the service promises to protect and not to process the data without the user's consent (although the service has full access to the data). Such an approach is called a "model with a trusted party" because security is based on complete trust. The purpose of this invention is to get as far from this paradigm as possible and to guarantee the users' privacy in the case of dishonest actions of third parties or hackers by guaranteeing this privacy through personalised cryptographic protocols rather than declarations.

The platform makes it possible to create anonymous one-function identities (personae) so that natural persons and businesses can protect their privacy on the Internet regardless of how their data are handled and processed by others. It must be noted that the terms 'identity' and 'persona' are interchangeable. With one click, users receive a unique identifier with fully functional data, such as first name, last name, e-mail address, password, phone number, debit card number and address of residence. Such data can also be dynamically added or removed as needed without the users losing their anonymity. As a result, businesses see them as different personae without any connections, where no single-purpose identities lead to real identities. A dishonest server or owner of an identity protection platform is unable, for mathematical reasons, to breach the elements of the declared security - the intermediary platform knows all of its users and is aware of the existence of all the personae in the system but is still unable to connect those data in any way. Such a feature is called separation of personae and is based on the blind signature concept. The intermediary platform is unable to determine which personae belong to a particular user. It is also unable to determine if two specific personae (even though anonymous) belong to one and the same user. Consequently, even if the anonymity of one persona is compromised, the other personae remain safe. If an anonymous identity is breached, the user will be warned and can abandon it for good. In turn, the determination of business-friendly limits makes it possible to control the number of IDs which the user can create to interact with specific online services - one natural person cannot create more accounts than the pre-defined number of accounts for a given platform, e.g. three accounts, which protects platform owners from attacks, mass account registration and spam. This is a challenging cryptographic problem and the solution will be described below. Limiting the number of created identities remains consistent with the concept of the invention because the number of identities belonging to a specific user is checked in accordance with the trustless paradigm. One of the most important invention features connected with the foregoing is the possibility of establishing which platforms are responsible for data leaks, if any, because a specific data set is assigned to only one platform; consequently, if such data are leaked, it is very easy to establish the responsible platform.

The created identities are generic - users may use them with any online platform (third party) and such a third party platform does not need to be integrated with the platform in question.

A more detailed presentation of the execution of the invention is presented below.

Informal description of system assumptions

The crucial element of the system is the intermediary party, divided here into two parts: the P1 non-secret part and the P2 anonymous part. In one embodiment, P1 is executed on the first server, while the P2 anonymous part is executed on the second server. The main distinction is that a user contacting P1 must always introduce themselves, while communication between users and P2 is always anonymous. More specifically, even if this is a slight oversimplification, the system functions as follows.

User interactions with P1, due to their non-secret nature, must be as limited as possible and they come down to account registration, acceptance of service fees and provision of anonymous tokens, which act as a quasi-currency in the interactions with P2. In contrast, the P2 module is responsible mainly for creating the personae. A persona is essentially a single anonymous account which may be later used for anonymous registration on third-party platforms, e.g. on the hypothetical website *Kalesony.pl.* At this point, it must be noted that the third-party platform, in this case *Kalesony.pl,* is not a part of this invention. For the P2 module to actually create a new persona for the user, the user must first pay the right number of anonymous tokens received earlier from P2 and then they must declare the third-party platform for which the persona is to be created. An appropriate protocol is able to make sure that no one (even though communicating with P2 anonymously) can create more than for instance three personae dedicated to one third-party platform, which is an incredibly important aspect of this invention. The persona limit may differ in other embodiments, for example it may be 1, 2, 4, 5 or any other number, and the restrictions can be different for different domains.

The system from the perspective of third-party platforms

A third-party platform, such as the already mentioned *Kalesony.pl,* usually asks the user for certain data during account registration, such as an e-mail address. A user caring about their privacy may in response use the data of a certain persona created for the user by P2 specifically for situations like that. This way the user effectively renders themselves anonymous, provided that they have not used the same address anywhere else. In one embodiment (this is an extra feature), a suspicious *Kalesony.pl* platform may also take the initiative to ask P2 if the address indeed comes from the persona which was declared as intended for *Kalesony.pl.* If the answer is positive, the platform gains certainty that the natural person who is creating an account right now will not do this more than three times.

Special characteristics of the solution

It is an important characteristic of the proposed solution that the intermediary platform knows (thanks to P1) all of its users and is aware of the existence of all the personae in the system (because it creates them). Despite that, it is unable to connect such data, which means that it is unable to determine whether any personae (and if yes then which ones) belong to a specific user. It is also unable to tell if two specific personae (even though anonymous) belong to one and the same user. That last characteristic is called separation of personae because it makes sure that even if the anonymity of one persona is compromised, the other personae remain safe. The general number of personae for a single user is limited, with anonymity preserved, due to tokens. Tokens also make it possible to introduce for instance various payment plans. It must be noted that though the personae are anonymous, their data are visible to the intermediary server. This means that if a user wants to be fully anonymous, they must also take care of the encryption of their data, e.g. encryption of e-mails which may reveal their identity. The problem of users anonymously connecting with P2 may not be trivial either: network protocol elements such as IP numbers must be considered. Most probably, only use of a TOR network may provide a sufficient security level.

Preliminary assumptions

For every *domain* the system defines the *limit(domain),* i.e. the maximum number of personae that can be created by the user for that domain. We always assume that *limit(domain)* $\leq L$. Additionally, *RG(domain)* will be used to determine a random element of a certain elliptic curve which is generated using a certain established *RG function.*

Account creation in P1

At the moment of account creation, i.e. once only, the user and the P1 server execute the following protocol:

- the user selects a random value from $Z_p$ $L$ times and tags the selected values as *partialSecretUserID$_i$* for $1 \leq$ *and* $\leq L$ (those values remain secret for the server);

- for every i the user calculates (this is the Pedersen Commitment) *partialUserID$_i$* = *Commit(partialSecretUserIDi, 0, i, randomness)* and sends those values to P1;

- the user executes the zero knowledge (hereinafter: ZK) protocol, where they prove that the actual *partialUserID$_i$* is correct but in doing so they do not disclose any extra values.

It is crucial, that at the registration step, and never later, the user commits to certain values of *partialSecretUserID$_i$*. There are very few of them and this fact will be later used to observe the limits.

Token acquisition in P1

The moment a registered user needs an anonymous token, they execute the following protocol with P1:

- the user selects a random *personalD* value (it remains secret for P1 but will be later learnt by P2) and calculates personaSlotID = *partialUserIDi-Commit(0, personalD, 0, randomness) = Commit(secretUserIDi, personalD, i, randomness\*)*, where i is a random (still unused) value from the set *{1...limit(domain)}* for the *domain* for which the user is planning to create a persona;

- the user sends personaSlotID to the server and proves (on ZK basis) that indeed personaSlotID = *partialUserID$_i$ · Commit(0, personalD, 0, randomness\*)*, for a certain (undisclosed) *personalD* and *partialUserID$_i$* (known to the server);

- the user receives a token from the server, i.e. a signed value *C = personaSlotID*. The token contains the message C' = *(z$^\gamma$, (C·g$^{rand}$)$\gamma$)*, where *z* and *g* are established public values and $\gamma$ is known only to the user.

The user receives the *C'* token, which is signed by the server and "contains what is needed"; thanks to the ZK protocol, it is later impossible to establish who actually received that token. Additionally, the homomorphism of Pedersen commitments is used here: if we know *commit(x)* and *commit(y)*, we can easily calculate *commit(x + y)*.

Persona creation in P2

Protocol:

- the user shows P2 the token generated by P1 and additionally sends to P2 the values of *personalD, domain* and *uniqueID = RG$^{(domain)partialUserSecretIDi}$*;

- the user proves that indeed

  *C' = (z$^\gamma$, Commit(partialSecretUserID, personalD, i; randomness$_4$)$^\gamma$ g$^{rnd·\gamma}$,*

  *uniqueID = RG$^{(domain)partialUserSecretIDi}$*

  and that *i ≤ limit(domain)*;

- if the proof turns out correct and the *uniqueID* value has never been used before to create any persona, the P2 server creates a new persona for the user, remembering of course the used *uniqueID* value.

The *uniqueID* value is defined by the following formula:

$$uniqueID = RG^{(domain)partialUserSecretID_i},$$

because every persona in the system must have a value associated with it as above and those values can never be repeated. Since *uniqueID* is a deterministic function of two values: the domain name and one of the *partialUserSecretID$_i$* elements, this guarantees that the limits will be observed. This is because the user establishes the *partialUserSecretID$_i$* values only once during registration so they have a limited pool of such values (the protocol additionally involves checking that *i ≤ limit(domain)*).

Another matter is anonymity and separation of personae - the latter arises from the fact that, in principle, appropriate values all across the system are not provided openly but as arguments of appropriate commits. This is why the P2 server seeing only *uniqueID* values for particular personae is unable to read the *partialUserSecretID$_i$* values from them, and only such values would make it possible to unmask the users. Due to ZK protocols, the server can always be convinced that the data are correct without their disclosure.

Mechanism of personae

Let us take a look at Robert (Bob) - a user who cares about data privacy. Bob shops online, buys a train ticket and has his car serviced. Each of those activities reveals something about him - his skin problems, the person he dates and that he has recently had a bump. It would be perfect if it were impossible to link each of those transactions to him. In other words, if each of the services (shop or garage) spoke to an anonymous person rather than to Robert directly. We will call such an anonymous person created for the purpose of contacting a specific service a 'persona'. Every persona has an e-mail address which will be used only in a service assigned to that persona. The service access password is also saved in the persona - the system covered by the invention functions here as the password manager and guarantees use of unique and strong passwords (the user never has to enter the password by themselves). The user may also choose settings where the connections with a particular persona are rendered anonymous, e.g. by TOR.

Further in the text, we will identify two sides of a user, each working almost independently. So there is a persona user, who is responsible for communicating with one service and remembers all the data required for that (e-mail, passwords). The user also communicates (anonymously) with the server in question the moment they register and extend validity. In contrast, the identity user is a real (nonanonymous) identity of the user. The user uses the identity to pass the system verification and pay for the service.

## The system on the side of the service provider

The service provider does not need any special integration with the system - while registering an account, the user gives an e-mail address corresponding to the persona. The service provider may verify if the e-mail is indeed assigned to its domain. By doing so, the service provider can be certain that the identity behind the persona cannot create more than (for example) 3 personae in the service. This is an effective protection against DDoS attacks.

## Technical execution - tokens

The platform must be secured against attacks. For example, a user may DDoS attack a server by creating a huge number of personae. A user may also try to create multiple personae for one domain - trying to work around the limits. If the (dishonest) user is the one who verifies the limits, the user may skip the verification and work around the limits. If the verification is carried out by the platform, the platform could learn about the connection between the personae and the users, which will make it impossible to implement the guarantees described in the introduction.

This is why the solution uses cryptographic tools, especially anonymous credentials. This makes it possible to issue the tokens to be used by the user. The structure of the tokens prevents a situation where their use could be linked to their creation. Certain information may be put inside a token at the moment of token creation which can be later extracted when the token is used. Such a token is used in the creation of a persona. Tokens are created when the user starts to use the services of a platform and undergoes identity verification. Although the user uses their secret data while creating a token by saving them in the token, the structure of the token creation protocol prevents the server from learning anything about such data. A persona is created with a fresh token. The user connects to the server anonymously (as a new persona). To register a persona on the server (and receive an e-mail address), the user opens the token and extracts the *personalD* from it (due to cryptography, the user cannot extract any *tokenID* other than that used in the creation of the token). The *personalD* will definitively identify the persona. To check the limits, the user extracts a certain value from the token, known as *uniqueID,* which is unique to every persona.

## Informal description of the features

The token system usually includes two protocols: one is used for issuing the token to the user and the other for use of the token by the user. The system needs two types of tokens: one representing the right to create a new persona and the other one representing the right to extend the validity of the persona. This is why the system consists of four protocols:

1. Get permission to create the personae.

The protocol is executed at the registration of a new user. This is when tokens are generated. The protocol is also executed on a cyclical basis (e.g. once a month) to allow the user to create more personae.

2. Create a persona.

The protocol is executed at the creation of a new persona, between the server and the persona. In the protocol, the user uses a fresh token representing the right to create a persona.

3. Get permission to extend the validity of the personae.

Protocol is generated by a real user and the server. While executing the protocol, the user receives tokens which allow them to extend the validity of a specific number of personae for a given month.

4. Extend the validity of the personae. A persona uses a token received by the user to extend its validity.

Guarantees

The properties of liveness are intuitive. An honest user will be able create as many personae in their interactions with the server as permitted and will be able to extend the validity of the persona. Any (dishonest) party is not able to create more personae than the number of the *Generate tokens* interactions which the party had with the server and in which the server signed the token - the number of personae within the epoch to which it received permission. The security guarantees are less obvious. For the server:

1. Not too many personae: any (dishonest) user is not able to create more personae than the number of the *Generate tokens* interactions which the party had with the server and in which the server signed the token.

2. Not too many extensions: any (dishonest) user in any epoch is unable to extend the validity of more personae than the number of the *Get permission to extend the validity of personae* interactions it had with the server for the epoch and in which the server signed the token. A dishonest user cannot use validity extension tokens issued for identity A to extend the validity of personae belonging to identity B.

3. Not too many personae in one domain: any (dishonest) user is not able to create more than 3 personae per domain.

The security guarantee for the user should state that the user's anonymity before other users is guaranteed. It is a property of anonymity that if the platform does not observe the protocol and tries to lift the user's anonymity, it will succeed only negligibly better than if it had made a guess. This will be formally described further in the text.

Data linked to identities and personae

While registering on the platform, every user generates (randomly selects) $\text{partialSecretUserID}_i$ for $i \in [1,L]$. Collectively, in one embodiment, they form a *secretID* which is a sequence of $partialSecretUserID_i$ for i from 1 to the globalLimit. Each of those IDs has a permission level corresponding to the i value and will be used to create personae on domains for which $i <= LIMIT(domain)$.

Every persona of a user has two parts - an anonymous persona (with which the user connects anonymously) and a slot on the user's account. The purpose of the system of tokens is to ensure the existence of connections between slots and personae, with the information about which persona corresponds to which slot remaining a secret. While creating a slot for a new persona, the user generates a *personalD* but does not reveal it to the server. The ID will be revealed on the side of the anonymous persona.

During token creation, the user specifies a slot and, together with the server, executes the token generation protocol. As a result, the user learns the token (which remains secret to the server). The token gives the user a right to create / extend the validity of a persona, depending on token type. The token is assembled under the message linked to *personalD* and *secretID.* While creating a persona, the user uses thus obtained token. By showing the token, they reveal the following values: *personalD* and $uniqueID = f(secretUserID_i, domainName)$. Afterwards, the user proves to have used a $secretUserID_i$ with the index $i <= limit(domain)$ and to have properly counted the presented *uniqueID.* By definition, *uniqueID* is the same for all user personae which were created for one service using a particular $secretUserID_i$ (and almost certainly different in the remaining cases). The server makes sure that any two personae in the system have a different *uniqueID* - if there is an attempt to register a persona which would results in a repetition, the server rejects the registration attempt. If the user has used a persona validity extension token, the server checks if both tokens point to the same *personalD.* The user also proves that both tokens were issued for the same *secretUserID.* This way it is impossible to use tokens of one identity to deactivate the personae of another identity.

ACL tokens

We use the tokens coming from the article Anonymous credentials light (F. Baldimtsi, A. Lysyanskaya, Proceedings of the 2013 ACM SIGSAC conference on Computer & communications security (CCS '13), 1087-1098, 2013). A certain data sequence (*a,b,c*) can be put inside those tokens in a way preventing the server from recognising that sequence directly. At the same time, the user may prove to the server that the data put inside the token that is being signed comply with a certain property. The server receives such a proof, checks it and generates a token only if the proof is correct. While using the token, the user may show the server the sequence (*a,b,c*) inserted in the token at its creation. The protocol guarantees that the user cannot show the server any sequence other than that used by the user at the moment of token creation. The user may also choose not to reveal the sequence (*a,b,c*) directly but only as a certain function. The server gains certainty that the revealed value is a properly calculated value of a function over the data used during token generation.

Public functions

Other necessary elements include hash functions. We need an *H* function returning the values in $Z_p$ -it will be used for random oracle instantiation in ZK proofs. We also need an RG function returning a *G* elliptic curve element. It is first needed to avoid trusted setup - public random elements of the G curve (needed as the base for the commit and ACL signatures) are generated as *RG*('noIDPublicParam1'), RG('noIDPublicParam2'), .... Furthermore, it is used to generate $g_{domain}$ = *RG(domain)* for every *domain* name. The protocol also has a public element in the form of the *LIMIT(domain)* function, which informs the user about the domain limit for one persona.

About the *uniqueID* value

The key element of the below protocol is linking the *uniqueID* value which is the *f* function of the (secret) user ID, the domain name and the value of the numerator (*uniqueID* = *f(secretUserID, domain, i)*) to every persona. If the server successfully forces the user to use only one user ID, correctly calculate the *uniqueIDand* use numerator values from the interval [1, *limit(domain)*], the server will gain a simple way of checking the limits - all it needs to do is check that every persona has a *uniqueID.* User security requires the server to be unable to learn virtually anything in the secret user ID based on the *uniqueID* value. It is also important that *uniqueID* values had high entropy to avoid collision (even if other users behave dishonestly). It would be perfect to take a pseudorandom function as f. Such functions are known but the level of their cryptanalysis is significantly lower than for generally used functions such as SHA512. One may also try to use ZK proofs for such functions but this is not very productive. As a result, we propose another way in our solution.

The user is assigned a *partialSecretUserID$_i$* sequence and a mechanism to check if the user has used a part with the index $i \in$ [1, *Limit(domain)*]. The next thing to be established is *uniqueID* = *RG(domain)$^{partiaSecretUserID^i}$.* The necessary pseudorandomness properties will arise from the Decisional DiffleHelman Hypothesis (DDH). This results in a crypto system which is based on minimum DDH assumptions and RO instantiation in simple ZK proofs through SHA512.

Detailed description of the solution

The tokens used are the ones described in the paper *Anoynmous Credentials Light.* Let *L* denote the limit of the number of personae which the user may create in one domain. The assumption is that if the I index appears, then *I ∈ [L].*

*Identity generation*

A user identity sent to the server contains a sequence of *partialUserID$_i$* values - as many as is denoted by L. Generating *partialUserID$_i$* means selecting a random *partialSecretUserID$_i$* from $Z_p$ and sending *Commit(partialSecretUserIDi, 0, i; randomness)* to the server. We additionally send a ZK proof of knowledge of *partialSecretUserID$_i$* that the sent value actually equals *Commit(partialSecretUserIDi, 0, i; randomness)* for a certain (secret) randomness. This way, the server receives a sequence of commits for *partialSecretUserID$_i$* and gains a certainty that the third position of number i commit includes a permission level that equals precisely i, which assures the server that the user has exactly one *partialSecretUserID$_i$* for every permission level.

By generating a slot with a level i permission, the user randomly selects a *personalD* and generates *personaSlotID = partialUserID$_i$·commit(0, personalD, 0, randomness$_2$) = commit(secretUserID$_i$, personalD, i, randomness$_1$ +randomness$_2$).* PersonaSlotID is sent to the server. Afterwards, the user sends a ZK proof of knowledge of the value of *personalD,randomness$_2$, i* that personaSlotID = *partiaUserID$_i$·commit(0, personalD, 0; randomness$_3$)* (for that proof, the *partialUserID$_i$* value sequence is a public parameter). Thus the server intuitively gains a certainty that the user has used one of their *partialSecretUserID$_i$* and has assigned the same i permission level which was specified during registration.

It must be noted that in the whole text the randomness parameter means a random value. If the parameter has an index, this means that other than previously used parameters are randomly selected for the operation.

*Token structure*

A token comprises two parts, and in a special case exactly two parts. The first one is the ACL token. The other one is the ZK proof of knowledge of the expansion of the messages and of their certain property. By generating a token for a slot with a particular *slotID* belonging to a user with a particular *userID,* the user and the server generate an ACL token under the message *C = personaSlotID.* The ACL token received by the user contains the message C' = $(z^\gamma, (C \cdot g^{rnd})^\gamma)$, for a certain *rnd* (known to the identity server) and a secret $\gamma$. The ACL adds *uniqueID, personaID, domainLimit* values to the ACL signature, as well as the proof of knowledge of *rnd*, $\gamma$, *partialSecretUserID, randomness\*i* that

$$C' = (z^\gamma, Commit(partialSecretUserID, personaID, i; randomness_4)^\gamma g^{rnd \cdot \gamma}$$

and $uniqueID = g_{domain}^{partialSecretUserID}$ and *i <= domainLimit.* This way, the user convinces the server that while generating the token they used a *partialSecretUserID* of a certain permission level sufficient for the domain.

Formal definition

The main component is the interactive token generation protocol - *genToken.* The received tokens are verified with the *tokenCheck* function. What is also needed is the functions generating data of users and data of personae: *generateUserID* and *generatePerosnaID* respectively. The whole protocol has a public setup.

*Protocol components*

The *setupPublicParams* procedure generates public parameters. They are used by all of the functions below but they will be left out for legibility purposes.

The *SetupServerKey* procedure - procedure for generation of server keys. The server generates a pairing *(serverPrivateKey, serverPublicKey)* and sends the public key to the user. This is an element of a trusted setup.

The *generateUserID* procedure, executed by the user during registration. The outputs are *userSecretData* kept a secret by the user and *userIdentity,* which the user sends to the server.

The *checkUserIdentity* function, which the server uses to check the correctness of *userIdentity.*

The *generatePersonaData* procedure, executed by the user, generating data for a new persona. Outputs of the execution: *personaSecretData* - data used by the user; *personaID* - persona ID shown to the persona server; *personaSlotID* - slot ID provided to the identity server.

The *checkPersonaSlotID(personaID)* function, which the server uses to check the correctness of the generated *personaUserID* versus a particular *personaID.*

The *genToken* code protocol - the token generation protocol. They user's input is the *publicServerKey, personaSecretData* and *domainName* and the server's input is the *serverPrivateKey, personaSlotID.* The public input is the *serverPrivateKey* and *epochNumber.* As a result of executing the protocol, the user learns the resulting token.

The (deterministic) function *tokenCheck: (token, serverPublicKey) -> (correctness, uniqueID, personaID, domainName).* The function checks token correctness versus the server key and gives a *uniqueID, domainName, personaID* and *epochNumber* that correspond to that token.

*Honest interaction process*

The functions are executed in epochs lasting a pre-defined period (e.g. a month). Epochs are numbered with *epochNumber.* Assignment of epoch numbers to epoch dates is an element of the setup. In subsequent epochs, users generate a token for all of their slots. Thus obtained tokens are shown to the persona server, which performs *checkToken* on them and verifies whether only tokens with a fixed *personaID* and *uniqueID* are used for the persona (the first shown token determines what data all subsequent tokens will need to have). Showing an appropriate token extends the validity of a persona (or activates it for the first time). The assumption is that the whole communication between the user and the server takes place in a private channel (e.g. it is encrypted).

Presented below is a description of what exactly each side does.

An honest user always uses the *publicServerKey* it received during the Setup. The user activates *generateUserID* at account creation. They send the *userIdentityID* to the server as its ID. For every new slot, the user activates *generatePersonaData* and sends the *personaSlotID* to the server. The server checks the received values with appropriate check functions (otherwise it rejects the registration). Whenever the user executes *genToken,* they use the above-obtained *userSecretUserData* and *personaSecretData* and the current epoch number. The user must execute *genToken* precisely once for all the slots in every epoch. Not every user slot must have a persona linked to it - until the user wants to create a persona for a given slot, the user generates a token using any *domainName* of their choice. When a user wants to create a persona for a given slot, they generate the token and, as an argument for the *genToken* protocol, they give the *domainName* that is to correspond to the created persona. Starting from that moment, the user will use this *domainName* in all future executions of *genToken* for that slot. For every user persona, the user shows the opening of the obtained token in every epoch.

An honest server saves the *userIdentityID* and personaSlotID received from the user. In every epoch, for every slot, it joins the token generation process together with the user. During the execution of *genToken,* it uses a correct *serverPrivateKey* (the one received at setup) and the *userIdentityID,* personaSlotID provided by the user at the registration of the identity and the slot. The server receives the tokens from the personae. Before it accepts a token, it checks its correctness and checks if the *domainName* is the same as the one stated in the persona. For the first token (called a confirmation token) accepted for a persona, it checks if there is no other, previously created persona with the same *uniqueID* in the system. A registration attempt which would result in a duplicate is rejected. As it receives subsequent tokens, the server requires that the *personaID* and *uniqueID* read using *checkToken* were the same as the ones read in the confirmation token and that they pertain to the current epoch. The server does not disclose the *personaID* saved in the domain to anyone.

*Liveness condition*

Let us consider an interaction between an honest server and an honest user and any number of dishonest users. In such a case, whenever the honest user executes *genToken,* this ends successfully. The resulting token is correct (*tokenCheck* execution, using the right server key, returns a result that the token is correct). *TokenCheck* returns the same *personaID* as the one obtained by the user at the generation of persona data (returned by *generatePersonaData*) and the same *domainName* as the one the user gave as the input for *tokenGen.* Moreover, *uniqueID = f(domainName,secretUserData).* All the conditions described above arise always, except for negligible events.

*Security conditions*

Some current epoch is determined during an experiment. Whenever an honest party enters *genToken,* it uses a current epoch. An adversary may order transition to the next epoch (which models waiting) at any time.

*Unforgeability*

Let us consider any (dishonest) user in interaction with an honest server. The user may:

1. create a new identity and give the server its *userID* (however generated) - the identity receives an ID;

2. create a new persona and give the server its *personaSlotID* (however generated) - the persona receives an ID;

3. enter into a *genToken* interaction with the server by specifying to the server, at the beginning, the identity from which the server is to take the used *userIdentityID* necessary for protocol execution and the number of the slot from which the server is to take the *personaSlotID*;

4. decide to move to the next epoch;

5. show the persona server a token whose acceptance is checked by the server - after the first good token is shown for a persona, such a persona is deemed confirmed.

At the end, the user shows a number of tokens. The user wins if the tokens are correct and have different *uniqueID* pairs, and the function g : *personaID- > slot* (defining to which identity the persona belongs) does not exist, where:

1. for every p persona, if the user has shown a token accepted by the server for the *p* persona in the r epoch, the user has executed the *genToken* in the *r* epoch using the *g(p)* slot;

2. for every T identity, the number of confirmed personae assigned (by g) to T identity slots regarding one domain does not exceed 3.

This property means that for every behaviour of an adversary who undergoes verification by the server (validity check of tokens and *uniqueID* limits), personae are linked to users in a way that is consistent with domain limits without generation of excessive tokens.

*Anonymity*

In this experiment, an honest user interacts with a dishonest server. The adversary may adaptively create new users and order them to create slots. For every user, the adversary may corrupt them (adaptively) and, consequently, learn all of their secrets and the openings of the tokens the user has generated. In every epoch, the adversary executes *genToken* along with each slot (the executions may be interwoven in any way). At the end of every epoch, the adversary receives a list of the tokens generated in that epoch, in a random sequence. After the interaction, the adversary specifies two slots of different uncorrupted users which were opened in the same epoch. Furthermore, for one of them, it specifies a persona to which (as it claims) the slot is assigned. The adversary wins if its guess was correct and the slots it specified met the described requirements. Due to the property of anonymity, the adversary loses this experiment with a probability of at last ½.

<u>Setup</u>

We first repeat the setup for the ACL. We establish a *G* cyclic group of prime order with a difficult Decisional Diffle-Halman. We establish its randomly selected elements *z,g,h* used by the ACL. They private key of the server is *x* $inZ_p$, and the public key is $g^x$. Furthermore (aside from ACL setup) random $h_0, h_1, h_2, h_3 \in G$ *are selected.*

<u>Identity generation</u>

Let *Commit(x,y,z;R)* mean $h_1^x h_2^y h_3^z h_0^R$. Let $\pi_{BASE}(x;\_,\_)$ mean a ZK proof of knowledge of the expansion of the x value in a base described with arguments, e.g. $\pi_{BASE}(x;h_0,h_1)$ is a proof of knowledge of the expansion in base $h_0, h_1$.

User identity consists of a sequence of *partialUserID$_i$* values - in the quantity as determined by *L*. We generate every value using the *generatePartialUserID* subprocedure described below. Generating *partialUserID* involves selecting a random *secretUserID* from $Z_p$ and sending the commit to the server. We additionally send the ZK proof of knowledge of the expansion in base $h_1$, $h_0$ to the server. More precisely:

*generatePartialUserID() :=*

*secretUserID,$R_u$ $\leftarrow^\$ Z_p$;*

*secretUserData := (secretUserID, $R_u$);*

*commitedSecretUserID := commit(secretUserID, 0, 0; $R_u$), $\pi_{BASE}$(commitedSecretUserID, $h_0$, $h_1$)*

where $\pi_1$ is the said proof. *GeneratePersonaID(maxLimit)* works as follows. *PersonaID* is sampled through uniform distribution. The smallest i is selected, one that still has not been used with this domain (i smaller than *domainLimit*, otherwise an error is returned), the i index, which is followed by generation of *personaSlotID = partialUserID$_i$ · commit(0, personaID, i; $R_u$)*. Afterwards, the ZK proof of knowledge of the value is known: *R',personaID.* that for a certain *i*

*personaSlotID* $= h_0^{R'} h_2^{personaIDpartialUserI} h_3^i$. This proof will be denoted by $\pi_{PERSONA}$(personaslotID, userIdentity). In *PersonaSecretData* we store the exponents of *personaSlotID* transcription in base $h_0, h_1, h_2, h_3$. To sum up, the following is done:

*generatePersonaID(domain) :=*

*i = nextIndexFor(domain)*

*$P_p$, $R_p$ $\leftarrow^\$ Z_p$;*

*personaSecretData := ($R_p$ + $R_{i,u}$, $P_{i,u}$, $P_p$, i);personaID := $P_p$;*

*personaSlotID = partialUserID$_i$ · commit(0, personaID, i; $R_u$), $\pi_{BASE}$(personaSlotID, $h_0$, $h_2$)*

*Token structure*

As has been mentioned, a token has two parts. The first one is the ACL token. The other one is the ZK proof of knowledge of the expansion of the messages and of their certain property. By generating a token for a slot with a particular *slotID* belonging to a user with a particular *userID,* the user and the server generate an ACL token under the message $C = personaSlotID$. Thus generated message equals *Commit(personaSecretData).* The ACL token received by the user contains the $(z^\gamma, (C \cdot g^{rnd})^\gamma)$ message for a certain *rnd* (known to the identity server) and a secret $\gamma$. The user adds the following to the ACL signature: the value of *uniqueID, personaID, domainLimit* and the proof of knowledge of *rnd,* $\gamma,$ *secretUserID,* $R_p, R_u, i$ that $C = (z^\gamma, (Commit(secretUserID, personaID, i; R_p) = (R_u \cdot g^{rnd})^\gamma)$ and *uniqueID* = $g_{domain}^{secretUserID}$ and *i <= domainLimit.* This proof will be denoted by $\pi_{TOKEN}(C_1, C_2,$ *uniqueID, personaID, domainLimit).*

The *compareToken* function compares the part of the token that is the ACL token (it leaves out the attached ZK proof). The *checkToken* function verifies the ACL token, the ZK proof, it checks if the *domainLimit* specified in the token is correct for this domain and returns the *personalD* and *uniqueID* saved in the token.

<u>Correctness</u>

This section presents sketches of the proofs for the properties described above with the Decisional Diffle-Helman assumption.

*Unforgeability*

Let A be the adversary winning an unforgeability game. Using a Forking Lemma, we receive a set of forking executions for every HZK inquiry. By starting the extraction procedure on thus obtained transcripts, we extract *rnd,* $\gamma,$ *secretUserID,* $R_p, R_u$ from every ZK proof attached to the shown tokens. By attaching thus obtained values as the shown ACL token openings, we obtain adversary $\tilde{A}$, the same as in the definition of one-more unforgeability for the ACL token. ACL security suggests that (it is highly probable that) the number of tokens shown by *A* does not exceed the number of its interactions with the server and that the commit expansions it has shown correspond (as assigned) to the messages used during message signing. Such an assignment of commits results in assignment of *f personalD* to slots. All that is left to be shown is that *f* complies with domain limits.

Based on the extraction of ZK proofs from the token, we learn the *a, b, c, d* values, that the *uniqueID* saved in the token equalls $g_{domain}{}^b$ and the message inside the ACL token equals $C = h_0^a h_1^b h_2^c h_3^d$. Since the *f* function preserves the content of the tokens, the server - during token generation - generated the token under the message $C = h_0^a h_1^b h_2^c h_3^d$ and *d <= limitDomain.* Based on extraction from the ZK evidence used by the identity user, we learn the values of *personalD, partialSecretUserID$_i$, R,* that they exist and that $C = h_0^R h_1^{secretUserID_i} h_2^{personalD} h_3^i$. If two thus obtained transcriptions of *C* in base $h_0, h_1, h_2, h_3$ do not have equal coefficients, then we have successfully solved the discrete logarithm. If they do, then $uniqueID = g_{domain}^{partialSecretUserID_i}$ for a certain *i,* where *i <= limit(domain).* The number of *uniqueID* values does not exceed the *limit(domain)* (the number of *i* values) so the domain limit on personae per user is adhered to.

*Anonymity*

The proof from the aforesaid ACL paper shows the following fact: there is a simulator (controlling the RO) generating the signature (along with RO modification at a random point) so the adversary is unable to tell the simulated view (view received through honest participation in the process of obtaining a token and the simulated signature) from the real one, except for negligible probability. This more technical fact is more convenient in use than the mere definition of anonymity.

Presented below is an analogical fact - we will show a simulator which will generate a token to be shown by a persona user without using any data regarding the actions of any user. It will be proven that replacing a correct token shown by the persona user with a simulated one makes it impossible for the recipient to tell the difference and that after such a replacement the identity user no longer efficiently uses the *domainName* argument (which specifies on which domains the user will use the tokens). Consequently, the whole behaviour of the user becomes simulated. This way we know that anything the adversary can deduce from its view it can just as well deduce from a simplified view which specifies only the number of users engaged into a particular type of interaction in a given round.

We first establish user $U_0$ and a specific token which we are planning to replace with the simulated one. The token has a domain, let it be $domain_0$. We first replace the ZK proof inside the token with a simulated proof. A thus obtained token has an identical distribution to the initial one because the ZK proofs used are perfectly-ZK. Accordingly, we replace the remaining ZK proofs used by the identity user (this does not change the distribution of their message). Now we replace the $H_{domain}$ pseudorandom function (used to change domain names into random elements of the *G group*) into a random function. The adversary will not notice the difference by definition of the pseudorandomness of the $H_{domain}$ function. No we replace the *uniqueID* value with a random value (we can do this because as we simulate the proof, we do not use the knowledge of $log_{g_{domain}}$ (uniqueID) anywhere). This way we have obtained the third hybrid. We claim that the adversary is unable to tell the difference between those hybrids. Let us assume that it can. We will present a successful way of solving the decisional-DH.

Let *A, B, C, D* be a random instance of the decisional-DH. Let us use $h_2 = A$, $h_2^{personalID_{U_0}} = B$. Although we are unable to calculate the just defined $personalID_{U_0} = log_{h_2} B = log_A B$, we only use the $h_2^{personalID}$ value in the behaviour of the identity user (because the ZK proof is already simulated).

All that is left to do is explain how we calculated the *uniqueID* values for the personae of the $U_0$ user. Even though we cannot know $log_A B$, we can assume that we know $log_A H(domain)$, for any domain - all we need to do is assume that the *H* function randomly selects an element from the *G* group by selecting its logarithm with base A. This way, whenever the modified user generates a token, we have $uniqueID_{domain} = H(domain)^{logAB} =, = A^{(logAB)(logAHdomain)} = B^{logAHdomain}$, which is something we are able to calculate. This way we have recreated the behaviour of the user from the second hybrid, although the user is now calculating things in a slightly different order. For the established $domain_0$, we will now replace the value of $H(domain_0) = C$ and $uniqueID_{domain_0} = D$. If *D* is random, this means we have recreated the third hybrid. If $log_B D = log_A C$, then $D = B^{logBD} = B^{logAC} = B^{logAH(domain0)}$, which means he have recreated the second hybrid. This concludes the proof of indistinguishability.

Afterwards, we replace the ACL token with a simulated token, using an ACL work simulator (the simulated token is a token under a random message sampled through uniform distribution). A thus obtained token is indistinguishable from the original token as far as calculations are concerned and as such it remains indistinguishable after a simulated ZK proof is added to it. At the very end, we may restore the original behaviour of the identity user and send original ZK proofs instead of the simulated ones. This does not change the distribution of the user's behaviour. This way we have shown a sequence of hybrids which replace one token with a simulated one. If we apply this process multiple times, we can replace all the issues of persona tokens with simulated ones. It just needs to be noted that whenever we programme RO, we do this at a random point (we select the point regardless of the transcript read until a particular moment), which means that, except for negligible probability, there will be no collisions in the sites of RO programming.

Last but not least, we would like to note that the behaviour of the identity user does not depend on the loaded *domainName*. This is so because the behaviour of the identity user would have followed an identical distribution if they had simulated the ZK proofs and randomly selected (without learning the expansion in appropriate bases) *partialUserID* and *personaSlotID*. The reason for that is that both *partialuserID* and *personalD* are in fact a statistically hiding Pedersen commitment. In the end, this shows that every party to the interaction (every persona user and every identity user) can be independently simulated in a way preventing the server from telling the difference. This shows (analogically to the definition of ZK through simulation) that the protocol does not reveal anything other than the interaction scheme.

It is also critical for the user to show only one token for every slot (even if they asked for more). Additionally, the current proof assumes that the user asks for one token only, which is easy to satisfy for 1-device users. For multiple-device users caution is advised - for example a specific device can be rendered a master device responsible for generating and issuing tokens.

## Claims

1. A method for creating and managing disposable identities relying on an intermediary platform divided into a non-secret part "P1" and an anonymous part "P2", the parts being executed on at least one server and comprising the following steps:

   a) A request to generate at least one token is sent by the user to the non-secret part "P1", to which the user contacting it must always introduce himself, moreover in order to identify the user within the system the user generates once a random value secretUserID and shares its commitment (L) with the server, the secretUserId is used as a part of the protocol to generate the Token;
   b) for each token request, the user and "P1" execute the Anonymous Credentials protocol, resulting in the generation of the token by the non-secret part "P1", each token contains commitment (C) to the secretUserId, the

anonymous credential's protocol guarantees that C commits the same value of secretUserId in all other token received by a given user, meaning tokens generated from each separate execution of this step;

c) for each token request, the user computes the uniqueID and sends a domain, unused token, computed uniqueID and preferably the personalD to the anonymous part "P2", wherein the personalD is any value which is randomly selected by the user and is not revealed in the non-secret part and requests the creation of a disposable identity dedicated to the given domain wherein the uniqueID is defined as:

uniqueID = f(domain, secretUserID, i), wherein
domain is a domain for which the disposable identity is to be generated
i is a counter used of the users disposable identities assigned to the domain;
f is a hash function

d) each token is verified by the anonymous part "P2", by proving by the user correctness of the provided uniqueID using a Zero-Knowledge Proof, the user proves the correctness of the uniqueID by proving the knowledge of a secretUserId and i value defined as:

uniqueID = f(domain, secretUserID, i)
$I \leq$ limit of disposable identities for the domain,
SecretUserID is included in commitment C, where C is included in the Token

e) for each token if the verification is correct and the uniqueID have not been generated before, the anonymous part "P2" creates the disposable identity, comprising access data concerning attributes related to the disposable identity, and provides the access data to the user;

wherein the user may generate a limited number of the disposable identities intended for use on one platform, whereby the maximum number of the disposable identities is pre-defined individually for each platform such that a different limit may be set for different platforms, and in that the anonymous part "P2" sees the unique ID, domain, access data and preferably personalD.

2. A method according to claim 1, **characterised in that** step (a) is preceded by a step where the user creates an account in the non-secret part "P1".

3. A method according to claim 1 or 2, **characterised in that** step (b) is executed by a first server, while steps (d) and (e) are executed by a second server.

4. A method according to any of the above claims, **characterised in that** an anonymous credentials light "ACL" token is generated at step (a).

5. A method according to any of the above claims, **characterised in that** the user may generate no more than three disposable identities.

6. A method according to any of the above claims, **characterised in that** the token generated during step (b) is a signed value C = personaSlotID and it also contains the message $C' = (z^\gamma, (C \cdot g^{rand})\gamma)$, where z and g are established public values and $\gamma$ is a value known only to the user, while

personaSlotID = $partialUserID_i \cdot$ Commit(0, personalD, 0, randomness) = Commit($partialsecretUserID_i$, personalD, i, randomness), where
$partialUserID_i$ = Commit($partialSecretUserID_i$, 0, i, randomness), where

i is the number of a subsequent disposable identity,
$partialSecretUserID_i$ is the secret value generated by user i
Commit means execution of the Pedersen commitment function,

personalD is any value which is randomly selected by the user and is not revealed in the non-secret part, and afterwards, at step (d), the user proves that
$C' = (z^\gamma, $ Commit($partialSecretUserID_i$, 0, i; randomness)$^\gamma$ $g^{rand}$,
$i \leq$ limit of disposable identities for a particular domain,
uniqueID = RG(domain)$^{partialUserSecretID_i}$, where

RG is the function returning the G elliptic curve element,
domain is the domain for which the disposable identity is to be generated.

7. A method according to any of claims 1 to 6, **characterised in that the** disposable identity includes data concerning at least one of: address of residence, e-mail address, phone, payment card, first name, last name, nationality.

8. A method according to any of claims 1 to 7, **characterised in that** step (e) is followed by the following steps:

   f) the user creates an account on a third party platform using data received at step (e);
   g) after receiving the request, the third-party platform sends an inquiry to the anonymous part (P2) to ask whether the used data were generated by the anonymous part "P2";
   h) a response is sent from the anonymous part "P2" to the third-party platform;

9. A computer programme with instructions which when activated on the server cause the server to execute the method according to any of claims 1 to 8.

10. A data medium which can be read by the server and which stores the programme referred to in claim 9.

**Patentansprüche**

1. Das Verfahren zur Erstellung und Verwaltung von Einwegidentitäten, die auf eine Vermittlungsplattform angewiesen sind, die in den nicht-geheimen Teil "P1" und den anonymen Teil "P2" unterteilt ist, wobei die Teile auf mindestens einem Server ausgeführt werden und die folgenden Schritte umfassen:

   a) Eine Anforderung zur Erzeugung mindestens eines Tokens wird vom Benutzer an den nicht-geheimen Teil "P1" gesendet, bei dem sich der Benutzer, der Kontakt aufnimmt, stets identifizieren muss. Darüber hinaus erzeugt der Benutzer einmalig einen zufälligen Wert secretUserID, um innerhalb des Systems identifiziert zu werden, und übermittelt dessen Commitment (L) an den Server, wobei secretUserID als Teil des Protokolls zur Erzeugung des Tokens verwendet wird;
   b) Für jede Token-Anforderung führen der Benutzer und "P1" das Protokoll für anonyme Berechtigungsnachweise (Eng. Anonymous Credentials Protocol) aus, wodurch der Token vom nicht-geheimen Teil "P1" erzeugt wird, wobei jeder Token ein Commitment (C) zur secretUserID enthält, wobei das Protokoll für anonyme Berechtigungsnachweise gewährleistet, dass C in allen anderen vom jeweiligen Benutzer empfangenen Token denselben Wert der secretUserID committed, d. h. in Tokens, die aus jeweils separaten Ausführungen dieses Schritts erzeugt wurden;
   c) Für jede Token-Anforderung berechnet der Benutzer die uniqueID und sendet eine Domäne, einen unbenutzten Token, die berechnete uniqueID und bevorzugt die personalD an den anonymen Teil "P2", wobei die personalD ein vom Benutzer zufällig ausgewählter Wert ist und im nicht-geheimen Teil nicht offengelegt wird, und die Erstellung einer für die jeweilige Domäne bestimmten Einwegidentität anfordert, wobei die uniqueID wie folgt definiert ist:

   uniqueID = f(Domäne, secretUserID, i), wobei
   Die Domäne eine Domäne ist, für die die Einwegidentität erzeugt werden soll.
   wobei i ein Zähler ist, der für die vom Benutzer der Domäne zugewiesenen Einwegidentitäten verwendet wird; f ist eine Hash-Funktion

   d) Jeder Token vom anonymen Teil "P2" verifiziert wird, indem der Benutzer die Korrektheit der angegebenen uniqueID mittels eines Null-Wissen-Beweises nachweist, wobei der Benutzer die Korrektheit der uniqueID nachweist, indem er die Kenntnis eines secretUserID- und i-Wertes nachweist, die wie folgt definiert sind:

   uniqueID = f(domain, secretUserID, i)
   i ≤ Limit der Einwegidentitäten für die Domäne
   SecretUserID ist in dem Commitment C enthalten, das wiederum Teil des Tokens ist,

   e) Für jeden Token, wenn die Verifikation korrekt ist und die uniqueID zuvor nicht erzeugt wurde, erstellt der anonyme Teil "P2" die Einwegidentität, die Zugangsdaten umfasst, welche sich auf Attribute beziehen, die mit der Einwegidentität verbunden sind, und stellt dem Benutzer diese Zugangsdaten zur Verfügung.

**dadurch gekennzeichnet, dass** der Benutzer eine begrenzte Anzahl von Einwegidentitäten erzeugen kann, die für die Nutzung auf einer bestimmten Plattform vorgesehen sind, wobei die maximale Anzahl der Einwegidentitäten für jede Plattform individuell vordefiniert ist, sodass für unterschiedliche Plattformen unterschiedliche Grenzwerte festgelegt werden können, und dass der anonyme Teil "P2" die uniqueID, die Domäne, die Zugangsdaten und bevorzugt die personalD sieht.

2. Das Verfahren nach Anspruch 1, **dadurch gekennzeichnet, dass** Schritt (a) ein Schritt vorausgeht, in dem der Benutzer ein Konto im nicht-geheimen Teil "P1" erstellt.

3. Das Verfahren nach Anspruch 1 oder 2, **dadurch gekennzeichnet, dass** Schritt (b) von einem ersten Server ausgeführt wird, während die Schritte (d) und (e) von einem zweiten Server ausgeführt werden.

4. Das Verfahren nach einem der vorstehenden Ansprüche, **dadurch gekennzeichnet, dass** im Schritt (a) ein "Anonymous Credentials Light" (ACL)-Token erzeugt wird.

5. Das Verfahren nach einem der vorstehenden Ansprüche, **dadurch gekennzeichnet, dass** der Benutzer nicht mehr als drei Einwegidentitäten erzeugen darf.

6. Das Verfahren nach einem der vorstehenden Ansprüche, **dadurch gekennzeichnet, dass** der im Schritt (b) erzeugte Token ein Wert C mit Vorzeichnen = personaSlotID ist und zudem die Nachricht C' = $(z^\gamma, (C \cdot g^{rand})^\gamma)$ enthält, wobei z und g festgelegte öffentliche Werte sind und Y ein Wert ist, der nur dem Benutzer bekannt ist, während

personaSlotID = partialUserID$_i$·Commit(0, personalD, 0, randomness) = Commit(partialsecretUserID$_i$, personalD, i, randomness), wobei
partialUserIDi= *Commit(partialSecretUserIDi,* 0, i, randomness), wobei

i die Nummer einer aufeinanderfolgenden Einwegidentität ist,
partialSecretUserID$_i$ der geheime Wert ist, der vom Benutzer i erzeugt wird
Commit die Ausführung von der Pedersen-Commitment-Funktion bedeutet,

personalD ein vom Benutzer zufällig ausgewählter Wert ist und im nicht-geheimen Teil nicht offengelegt wird und danach im Schritt (d) der Benutzer nachweist, dass
C' = $(z^\gamma,$ Commit(partialSecretUserID$_i$, 0, i; randomness) $^\gamma$ g$^{rand}$,
i ≤ Limit der Einwegidentitäten für eine bestimmte Domäne,
uniqueID = RG(domain)$^{PartialUserSecretID^i}$, wobei
RG die Funktion ist, die das G-Element der elliptischen Kurve zurückgibt,
Domäne eine Domäne ist, für die die Einwegidentität erzeugt werden soll.

7. Das Verfahren nach einem der Ansprüche 1 bis 6, **dadurch gekennzeichnet, dass** die Einwegidentität Daten enthält, die sich auf mindestens eines der folgenden beziehen: Wohnadresse, E-Mail-Adresse, Telefon, Zahlungskarte, Vorname, Nachname, Staatsangehörigkeit.

8. Das Verfahren nach einem der Ansprüche 1 bis 7, **dadurch gekennzeichnet, dass** auf Schritt (e) folgende Schritte folgen:

f) Der Benutzer erstellt ein Konto auf einer Drittanbieterplattform mittels der in Schritt (e) erhaltenen Daten ;
g) Nach Erhalt der Anforderung sendet die Drittanbieterplattform eine Anforderung an den anonymen Teil "P2", um zu prüfen, ob die verwendeten Daten vom anonymen Teil "P2" erzeugt wurden;
h) Eine Antwort wird vom anonymen Teil "P2" an die Drittanbieterplattform gesendet;

9. Ein Computerprogramm mit Anweisungen, die, wenn sie auf einem Server ausgeführt werden, den Server veranlassen, das Verfahren nach einem der Ansprüche 1 bis 8 auszuführen.

10. Ein Datenträger, der von einem Server gelesen werden kann und das Programm gemäß Anspruch 9 speichert.

**Revendications**

1. Le procédé de création et de gestion d'identités jetables s'appuyant sur une plateforme intermédiaire divisée en une partie non secrète « P1 » et une partie anonyme « P2 », les parties étant exécutées sur au moins un serveur et comprenant les étapes suivantes :

   a) Une demande de génération d'au moins un jeton est envoyée par l'utilisateur à la partie non secrète « P1 », à laquelle l'utilisateur qui la contacte doit toujours se présenter. De plus, afin d'identifier l'utilisateur au sein du système, celui-ci génère une fois une valeur aléatoire secretUserID et partage son engagement (L) avec le serveur. Le secretUserId est utilisé dans le cadre du protocole pour générer le jeton ;
   b) pour chaque demande de jeton, l'utilisateur et « P1 » exécutent le protocole d'identifiants anonymes, ce qui entraîne la génération du jeton par la partie non secrète « P1 ». Chaque jeton contient un engagement (C) envers le secretUserId. Le protocole d'identifiants anonymes garantit que C s'engage à la même valeur de secretUserId dans tous les autres jetons reçus par un utilisateur donné, c'est-à-dire les jetons générés à partir de chaque exécution distincte de cette étape ;
   c) pour chaque demande de jeton, l'utilisateur calcule l'identifiant unique et envoie un domaine, un jeton inutilisé, l'identifiant unique calculé et, de préférence, l'identifiant personnel à la partie anonyme « P2 », où l'identifiant personnel est une valeur quelconque choisie au hasard par l'utilisateur et non révélée dans la partie non secrète, et demande la création d'une identité jetable dédiée au domaine donné, où l'uniqueID est défini comme suit :

   uniqueID = f(domaine, secretUserID, i), où
   domaine est un domaine pour lequel l'identité jetable doit être générée.
   i est un compteur utilisé pour les identités jetables attribuées aux utilisateurs du domaine ;
   f est une fonction de hachage.

   d) chaque jeton est vérifié par la partie anonyme « P2 », en prouvant par l'utilisateur l'exactitude de l'uniqueID fourni à l'aide d'une preuve à divulgation nulle de connaissance. L'utilisateur prouve l'exactitude de l'uniqueID, en prouvant la connaissance du secretUserId et de la valeur i définie comme suit :

   uniqueID = f(domaine, secretUserID, i)
   I ≤ limite d'identités disponibles pour le domaine,
   Le SecretUserID est inclus dans l'engagement C, où C est inclus dans le jeton

   e) pour chaque jeton, si la vérification est correcte et que l'uniqueID n'a pas été généré auparavant, la partie anonyme « P2 » crée l'identité jetable, comprenant les données d'accès concernant les attributs liés à l'identité jetable, et fournit les données d'accès à l'utilisateur ;

   **caractérisé en ce que** l'utilisateur peut générer un nombre limité d'identités jetables destinées à être utilisées sur une plateforme, le nombre maximal d'identités jetables étant prédéfini individuellement pour chaque plateforme, de sorte qu'une limite différente peut être fixée pour différentes plateformes, et **en ce que** la partie anonyme « P2 » voit l'identifiant unique, le domaine, les données d'accès et, de préférence, l'identifiant personnel.

2. Le procédé selon la revendication 1, **caractérisé en ce que** l'étape (a) est précédée d'une étape où l'utilisateur crée un compte dans la partie non secrète « P1 ».

3. Le procédé selon la revendication 1 ou 2, **caractérisé en ce que** l'étape (b) est exécutée par un premier serveur, tandis que les étapes (d) et (e) sont exécutées par un deuxième serveur.

4. Le procédé selon l'une quelconque des revendications ci-dessus, **caractérisé en ce qu'**un jeton « ACL » (Anonymous Credentials Light) est généré à l'étape (a).

5. Le procédé selon l'une quelconque des revendications précédentes, **caractérisé en ce que** l'utilisateur ne peut générer plus de trois identités jetables.

6. Le procédé selon l'une quelconque des revendications ci-dessus, **caractérisé en ce que** le jeton généré pendant l'étape (b) est une valeur signée C = personaSlotID et contient également le message C' = $(z^\gamma, (C \cdot g^{rand})^\gamma)$, où z et g sont des valeurs publiques établies et $\gamma$ est une valeur connue uniquement de l'utilisateur, tandis que

personaSlotID = partialUserID$_i$ Commit(0, personaID, 0, randomness) = Commit(partialsecretUserID$_i$, persona-ID, i, randomness), où

partialUserIDi= Commit(partialSecretUserID$_i$, 0, i, randomness), où

> i est le numéro d'une identité jetable ultérieure,
> partialSecretUserIDi est la valeur secrète générée par l'utilisateur i.
> Commit signifie exécution de la fonction d'engagement Pedersen,

personaID est une valeur choisie au hasard par l'utilisateur et qui n'est pas révélée dans la partie non secrète. et ensuite, à l'étape (d), l'utilisateur prouve que

C' = (z$^\gamma$, Commit(partialSecretUserID$_i$, 0, i; randomness) $^\gamma$ g$^{rand}$,

i $\le$ limite d'identités disponibles pour un domaine particulier,

uniqueID = RG(domaine)$^{partialUserSecretID_i}$, où

RG est la fonction qui renvoie l'élément de courbe elliptique G,

domaine est le domaine pour lequel l'identité jetable doit être générée.

**7.** Le procédé selon l'une quelconque des revendications 1 à 6, **caractérisé en ce que** l'identité jetable comprend des données concernant au moins l'un des éléments suivants : adresse de résidence, adresse électronique, numéro de téléphone, carte de paiement, prénom, nom, nationalité.

**8.** Le procédé selon l'une quelconque des revendications 1 à 7, **caractérisé en ce que** l'étape (e) est suivie des étapes suivantes :

> f) l'utilisateur crée un compte sur une plateforme tierce à l'aide des données reçues à l'étape (e) ;
> g) après avoir reçu la demande, la plateforme tierce envoie une requête à la partie anonyme (P2) pour demander si les données utilisées ont été générées par la partie anonyme « P2 » ;
> h) une réponse est envoyée depuis la partie anonyme « P2 » vers la plateforme tierce ;

**9.** Un programme informatique comprenant des instructions qui, lorsqu'elles sont activées sur le serveur, amènent celui-ci à exécuter le procédé selon l'une quelconque des revendications 1 à 8.

**10.** Un support de données pouvant être lu par le serveur et stockant le programme mentionné dans la revendication 9.

**EP 3 989 482 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10511493 B1
- US 10931650 B1
- US 10320753 B1
- WO 2021112973 A1
- CN 113268722 A
- GB 2549786 A
- US 2016065541 A1

**Non-patent literature cited in the description**

- **M.LSAAKIDIS** ; **H.HALPIN** ; **G.DANEZIS**. UnlimitID: Privacy-Preserving Federated Identity Management using Algebraic MACs. *WPES '16: Proceedings of the 2016 ACM on Workshop on Privacy in the Electronic Society*, 2016, vol. 10, 139-142
- **F. BALDIMTSI** ; **A. LYSYANSKAYA**. Anonymous credentials light. *Proceedings of the 2013 ACM SIGSAC conference on Computer & communications security (CCS '13)*, 2013, 1087-1098

22